# EUROPEAN PATENT SPECIFICATION

(11) **EP 4 372 696 B1**
(45) Date of publication and mention of the grant of the patent: **04.11.2026**
(21) Application number: 22306703.4
(22) Date of filing: 18.11.2022
(51) Int. Cl.: G06V 10/40, G06T 7/70, G06V 10/82, G06V 20/64, G06V 10/80

(54) **METHOD FOR TRAINING A FIRST NEURAL NETWORK TO DETERMINE THE VIEWPOINT OF AN OBJECT INSTANCE IN AN IMAGE, AND ASSOCIATED SYSTEM**
VERFAHREN ZUM TRAINIEREN EINES ERSTEN NEURONALEN NETZWERKS ZUR BESTIMMUNG DES BLICKPUNKTS EINER OBJEKTINSTANZ IN EINEM BILD UND ZUGEHÖRIGES SYSTEM
PROCÉDÉ D'APPRENTISSAGE D'UN PREMIER RÉSEAU NEURONAL POUR DÉTERMINER LE POINT DE VUE D'UNE INSTANCE D'OBJET DANS UNE IMAGE, ET SYSTÈME ASSOCIÉ

(43) Date of publication of application: 22.05.2024
(73) Proprietor: TOYOTA JIDOSHA KABUSHIKI KAISHA, Aichi-Ken 471-8571 (JP); The University Court Of The University of Edinburgh, Edinburgh EH8 9YL (GB)
(72) Inventor: MEIER, Sven, 1140 Brussels (BE); MARIOTTI, Octave, Edinburgh, Scotland, EH8 9YL (GB); BILEN, Hakan, Edinburgh, Scotland, EH8 9YL (GB); MAC AODHA, Oisin, Edinburgh, Scotland, EH8 9YL (GB)
(74) Representative: Cabinet Beau de Loménie

(56) References cited:
- EP-A1- 4 075 382
- MARIOTTI OCTAVE ET AL: "ViewNet: Unsupervised Viewpoint Estimation from Conditional Generation", 2021 IEEE/CVF INTERNATIONAL CONFERENCE ON COMPUTER VISION (ICCV), IEEE, 10 October 2021 (2021-10-10), pages 10398 - 10408, XP034093191, DOI: 10.1109/ICCV48922.2021.01025
- MARIOTTI OCTAVE ET AL: "Edinburgh Research Explorer ViewNeRF: Unsupervised Viewpoint Estimation Using Category- Level Neural Radiance Fields ViewNeRF: Unsupervised Viewpoint Estimation Using Category-Level Neural Radiance Fields", PROCEEDINGS OF THE 33RD BRITISH MACHINE VISION CONFERENCE THE 33RD BRITISH MACHINE VISION CONFERENCE, 21 November 2022 (2022-11-21), XP093039318, Retrieved from the Internet <URL:https://www.pure.ed.ac.uk/ws/files/310582386/ViewNeRF_MARIOTTI_DOA30092022_AFV.pdf> [retrieved on 20230414]

## Description

### BACKGROUND OF THE INVENTION

### 1. Field of the Invention

The present disclosure is related to the field of computer vision. More precisely, the present disclosure relates to neural networks able to detect viewpoints of object instances in images.

### 2. Description of Related Art

It has been proposed to detect three-dimensional objects in images acquired by cameras by using neural networks implemented on computer systems. Typically, it is desirable to also obtain information relative to the 6D pose of object instances in an image. "6D pose" is an expression well known to the person skilled in the art which designates the combination of the three-dimensional position and of the three-dimensional orientation of an object instance. Obtaining the 6D pose is particularly useful in the field of robotics wherein object instances are detected and manipulated. It is also useful to determine the orientation of an object instance in a driving scene to as to allow autonomous or partially autonomous driving.

The viewpoint of an object instance in an image is one such information relative to the 6D pose which is desirable. The viewpoint can be defined as the azimuth, the elevation, and the in-plane rotation of an object relative to the camera used to acquire the image.

Object viewpoint estimation is one of the key components required to enable autonomous systems to understand the 3D world. Known methods in controlled environments have been observed that successfully detect the viewpoints of object instances. These known methods benefit from modern learnable representations and have been shown to help other vision tasks such as object detection and 3D reconstruction, and have been used in various applications. For example, artificial neural networks (neural networks hereinafter) have been used to detect viewpoints.

In order to obtain a neural network which performs the task of determining automatically the viewpoint of an object instance in an image, a training phase of the neural network has to be performed. This training phase is usually performed using a labelled set of training images. By labelled, what is meant is that the viewpoint of an object of interest is provided for each image of the set of training images; the provided viewpoint is called the "ground truth". Training then consists in inputting the images from the training set to the neural network, comparing the output of the neural network with the corresponding ground truth, and adapting parameters (i.e., weights) of the neural network on the basis of this comparison (for example using the well-known stochastic gradient method).

As is well known in the art, a large number of labelled training images is necessary to obtain a good training of a neural network. Large-scaled labeled datasets have been an important driving force in the advancement of the state-of-the-art in computer vision tasks. However, annotating data is expensive (i.e. time-consuming), and is not scalable to a growing body of complex visual concepts. In fact, obtaining ground truths/labels typically involves using specialized hardware, controlled environments, calibrated laboratory setups, and an operator manually aligning 3D CAD models with real-world objects.

The above methods can be designated as supervised methods. These have been extensively studied, with applications in the fields of robotics or autonomous driving. These methods can successfully deliver 3D bounding boxes surrounding detected objects.

There also exist methods which learn representations that are aware of the underlying 3D structure of object instances from images ("3D-aware representations").

It has been proposed to disentangle the pose of an object instance from its appearance, with or without pose supervision (see for example the article "Interpretable Transformations with Encoder-Decoder Networks", Worrall & Al., In Proceedings of the IEEE International Conference on Computer Vision, pages 5726-5735, 2017 or the article "Deep Convolutional Inverse Graphics Network", Kulkarni & Al., In Advances in neural information processing systems, pages 2539-2547, 2015). Various solutions have been proposed but that do not preserve the 3D geometry in rendering, or that fail to produce high-quality reconstructions. EP 4 075 382 A1 discloses a computer-implemented system and method for estimating the pose of an object from image data using machine-learning models.

How to use unlabeled data remains desirable to train a neural network to perform a task such as viewpoint estimation, as unlabeled data is inexpensive and easier to obtain.

### SUMMARY OF THE INVENTION

To this end, the present invention first provides a method for training a first neural network to determine the viewpoint of an object instance in an image, the object instance belonging to a category of objects, the method comprising, for each pair of a training dataset of *N* unlabeled pairs of images, each pair of images comprising a first image on which an object instance belonging to said category is positioned under a first viewpoint and a second image on which the same object instance is positioned under a second viewpoint which differs from the first viewpoint:
- inputting the first image of the pairs of images to the first neural network, said first neural network being configured to determine the viewpoint of an object instance in an image belonging to said category of objects,
- inputting the second image of the pairs of images to a second neural network configured to determine appearance information of an object instance in an image belonging to said category of objects,
- jointly training the first neural network, the second neural network and a third neural network configured to generate a synthetic image of an object instance of said category of objects using a Neural Radiance Fields-based model, the third neural network having as inputs data related to a viewpoint determined by the first neural network for the object instance of the first image and an appearance information determined by the second neural network for the object instance of the second image, the training being applied by setting weights of the first, the second and the third neural networks, so as to minimize a generation loss function based on a distance between the first image of the pairs of images and a synthetic image generated by the third neural network.

The method therefore proposes an unsupervised training method. The dataset (which may also be referred to as a training dataset) is an unlabeled dataset. The viewpoints of the object instances in the images of this dataset are not known. Training of the first neural network is however performed under the condition that each pair of images shows the same object (and different pairs can show different objects) but under different viewpoints. More precisely, if the viewpoint detection is accurate, then the image outputted by the third neural network will be as close as possible to the original first image. The training will then strive to reduce the distance between the two images.

In the above method, only appearance information is leveraged from the second image. According to the invention, "appearance information" of an object instance includes its geometry/structure, 3D shape, color, and/or texture, etc. The method according to the invention trains the second neural network to output appearance information that is used by the third neural network for generating a synthetic image which is then compared with another image to set weights of the first, second and third neural networks. The appearance information is essential for the invention since without appearance, the training does not converge.

In the first stages of the training, the first, the second, and the third neural network output random information, and subsequent iterations of the training method lead the first neural network to output a viewpoint, the second neural network to output appearance information, and the third neural network to output a synthetic image as explained above. Consequently, the person skilled in the art will be able to select the dimensions of the layers of each of these so as to accommodate a viewpoint, appearance information (the size should be large enough to include the shape, the color, etc.), and an image.

In the present description, "viewpoint" corresponds to the viewpoint with respect to the camera used to acquire the image on which the object is located on. The viewpoint of an object instance may be defined as the combination of the azimuth angle of the object instance with respect to a camera, the elevation of the object instance, and the in-plane rotation of the object instance (Euler angles).

The "category" of an object instance can be referred to as the type or the class of an object instance, in a manner which is usually done by the person skilled in the art in the field of object detection or semantic segmentation. By way of example, the category can be selected in a list of categories of objects typically present in a scene observed on a street. For example, the categories can be chosen in the list comprising car, pedestrian, cyclist, bus, truck, etc. Categories may also be defined more precisely (for example, for cars, it is possible to consider sedans, compact cars, etc.). For example, the object instance in the above method is a car and a pair of images will include two different images of the same car seen under different viewing angles.

Jointly training the neural networks can be performed iteratively. For example each iteration can comprise inputting a first image of a pair to the first neural network and the second image of this pair to the second neural network, and calculating said distance. After each calculation of a distance, or after a plurality of distances are calculated (in the case of batch training), the stochastic gradient descent may be used or any other suitable training algorithm or variant of the stochastic gradient descent. The stochastic gradient descent can be used to adapt the weights of the first neural network, the second neural network, and the third neural network in a manner known in itself.

The training method according to the invention comprises minimizing a generation loss, and, for example, and back-propagating this generation loss through the first neural network, the second neural network, and the third neural network.

It is worth noting that this generation loss is a function which increases with said distance, so that minimizing this generation loss enhance generating a synthetic image which is close to the first image of the pair. It should be noted that the person skilled in the art will know how to select the structures of the first neural network, of the second neural network, and of the third neural network. For example, the first neural network has to be able to receive images having a given resolution as input with a depth of 3 (if it receives RGB images), and it also has to output a representation of a viewpoint (for example at least three numbers for representing the viewpoint (azimuth, elevation, in-plane rotation), or the coordinate of a point on a unit sphere), and this corresponds to given numbers of neurons for the first layer and for the final layer of this first neural network.

Also for example, the second neural network has to be able to receive images having a given resolution as input with a depth of 3 (if it receives RGB images). It also has to be able to output appearance information of an object on the image, and this corresponds to given numbers of neurons for the first layer of the second neural network and the final layer of the second neural network. The dimensions of this appearance information can be found in a calibration step. By way of example, the appearance information should contain enough information so that an image of the object can be elaborated under any viewpoint. If the object is a car, the appearance information should contain enough information so that the shape and the color of the car can be included.

The third neural network is a NeRF (for Neural Radiance Fields), i.e., a pipeline comprising a ray-casting operation, a neural network core, and a rendering operation. To that end, the third neural network comprises a ray-casting module configured to implement a ray-casting operation, a neural network core module, and a rendering module configured to generate a synthetic image using volume rendering techniques. The viewpoint determined by the first neural network is used to determine a set of inputs on which the core neural network is queried. In an example, this core neural network is a fully-connected neural network which that takes as input coordinates in 3D space (e.g., x, y, z, ρ, φ) and a viewing direction determined based on this viewpoint.

The use of a NeRF offers the advantage of providing a synthetic image having a high quality, since the rending is not limited by the spatial resolution of a voxel grid that makes it unable to reconstruct fine details and viewpoint dependent illumination effects.

It should be noted that the appearance information can be in a coded form. This could be the case if the second neural network has the structure of an encoder which could be used in an auto-encoder configured to process images. In an auto-encoder, the output of the encoder contains enough information in a coded manner to retrieve the original image. The third neural network if configured to deliver images, for examples images having the same resolution as the images inputted to the first and second neural network. This indicates the number of neurons of the final layer of this third neural network. This third neural network may also be configured to be able to receive, at any point in its structure, appearance information and a viewpoint.

The person skilled in the art will also know how to determine the distance between two images, for example the distance between the output of the third neural network and the first image of the pair. For example, this distance can be an Euclidean, a Mahalanobis or a Chord distance.

Also, the method according to the invention is able to automatically determine the viewpoints of objects from a given category, or objects from a plurality of categories. Preferably, the images used in the above method only show one object of this plurality of category per image.

It is worth noting that the first neural network which is trained by the method according to the invention is also used at testing time to detect the viewpoints of objects, and that the second and the third neural networks are only used during the training phase.

In particular implementations, the distance is defined by a mean of a perceptual loss function 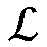 applied between the first image (in its entirety) and the synthetic image, for the *N* pairs of images. This feature offers the advantage of improving quality of the images outputted by the third neural network.

In particular implementations, the generation loss function is further based on a pose regularization term 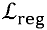 applied to the viewpoint determined by the first neural network.

In particular implementations, the pose regularization term 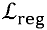 is weighted by a scalar *λ* progressively tuned during training. This feature offers the advantage of preventing unnecessary noise. More precisely, when jointly estimating poses and training the NeRF model, the first neural network can introduce a significant amount of noise, as the randomly selected pixels might not contain enough relevant information to recover incorrect estimated poses. It has been observed that progressively tuning the scalar *λ* can overcome this difficulty.

In particular implementations, the generation loss function equals $\frac{1}{N} {\sum }_{i = 1}^{N} L \left({f}_{r}\left({f}_{a}\left({I}_{i}^{′}\right),{f}_{p}\left({I}_{i}\right)\right),{I}_{i}\right) + {λL}_{reg} \left({f}_{p}\left({I}_{n}\right)\right)$ with 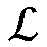 the perceptual loss function 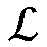 applied between the first image *Iᵢ* and a synthetic image *I"ᵢ, fₚ*(*Iᵢ*) the viewpoint determined by the first neural network for the object instance of the first image *Iᵢ,* ${f}_{a} \left({I}_{i}^{′}\right)$ the appearance information determined by the second neural network for the object instance of the second image *I'ᵢ,* ${f}_{r} \left(\left({f}_{a}\left({I}_{i}^{′}\right),{f}_{p}\left({I}_{i}\right)\right)\right)$ the synthetic image *I"ᵢ,* 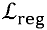 the pose regularization term applied to the viewpoint determined by the first neural network, and *λ* the scalar.

In particular implementations, the first neural network comprises a multi-head predictor configured to determine a plurality of *B* viewpoint hypothesis ${p}_{1 , … , B}^{′}$*,* and the method further comprises, at the third neural network:
- for each viewpoint hypothesis of the plurality, generating an intermediate image with a first quality,
- for each intermediate image, computing a distance between said intermediate image and the first image of the pairs of images,
- selecting the viewpoint hypothesis associated with the shortest distance; and,
- generating the synthetic image with a second quality based on the selected viewpoint hypothesis, the second quality being higher than the first quality.

In particular implementations, the first and second quality refer to different resolutions.

A known difficulty is that the first neural network may be subject to local minima and may not receive, during back propagating gradients, meaningful gradients from the third neural network, as reconstruction errors can arise either from the reconstruction process or an incorrect viewpoint prediction. This may lead to the collapse of viewpoint predictions and to the generation of a synthetic image *I"ᵢ* where the model relies only on the appearance encoding *a*. It has been observed that having a first neural network able to deliver multiple hypotheses, and a third neural network configured to generate a high quality synthetic image associated with the smallest distance can overcome this difficulty.

In particular implementations, the viewpoint hypothesis are distributed by following a prior distribution 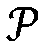 . This feature offers the advantage of preventing training collapse or instability, and this even if all heads of the multi-head predictor predict a same viewpoint.

In particular implementations, the pose regularization term generation 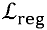 () is defined as: ${L}_{reg} = \frac{1}{K} {\sum }_{i = 1}^{K} {min}_{j = 1 .. B} {\left‖{p}_{i}^{∗}-{p}_{j}^{′}\right‖}^{2}$ with *K* a number of pseudo-targets ${p}_{1 , … , K}^{∗} ∼ P$ selected among the *B* viewpoint hypothesis ${p}_{1 ,}^{′} {p}_{2 , … ,}^{′} {p}_{B , … ,}^{′} , {p}_{j}^{′}$ the viewpoint hypothesis having the closest distance with a pseudo-target ${p}_{i}^{∗}$, and ∥ ∥ a distance. This feature offers the advantage of preventing the collapse of all predictions to a single point, while being very cost-efficient.

In particular implementations, the third neural network uses an object conditional generating process, the third neural network comprises a neural network core having a plurality of fully connected layers, and the method according to the invention further comprises inputting the appearance information to different layers of the plurality.

In particular implementations, the second neural network is trained to learn a global latent space shared over all object instances of the dataset.

A second aspect, outside the subject-matter of the claimed invention, concerns a neural network trained by the method according to the invention, such as the first neural network.

According to a third aspect, the present invention concerns a system for training a first neural network to determine the viewpoint of an object instance in an image, the object instance belonging to a category of objects, the system comprising:
- a first module including the first neural network, said first neural network being configured to determine the viewpoint of an object instance in an image belonging to said category of objects, said first neural network being configured to take as input a first image of a pair of images on which an object instance belonging to said category is positioned under a first viewpoint;
- a second module including a second neural network configured to determine appearance information of an object instance in an image belonging to said category of objects, said second neural network being configured to take as input a second image of a pair of images on which an object instance belonging to said category is positioned under a second viewpoint which differs from the first viewpoint;

- a third module including a third neural network configured to generate a synthetic image of an object instance of said category of objects using a Neural Radiance Fields-based method, the third neural network having as inputs data related to a viewpoint determined by the first neural network for the object instance of the first image and an appearance information determined by the second neural network for the object instance of the second image, and,
- a training module configured to jointly train the first neural network, the second neural network and the third neural network, the training being applied by setting weights of the first, the second and the third neural networks, so as to minimize a generation loss function based on a distance between the first image of the pairs of images and a synthetic image generated by the third neural network.

Embodiments of the present invention also extend to programs which, when run on a computer or processor, cause the computer or processor to carry out the method described above or which, when loaded into a programmable device, cause that device to become the device described above. The program may be provided by itself, or carried by a carrier medium. The carrier medium may be a storage or recording medium, or it may be a transmission medium such as a signal. A program embodying the present invention may be transitory or non-transitory.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
Figure 1 depicts for illustrative purposes a data flow diagram of a training method according to a particular implementation of the invention;
Figure 2 illustrates a particular implementation of a system 1000 according to the invention;
Figure 3 illustrates an example of the hardware architecture of the system illustrated by Figure 2; and
Figure 4 is a flowchart of a training method according to a particular implementation of the invention.

### DETAILED DESCRIPTION OF EMBODIMENTS

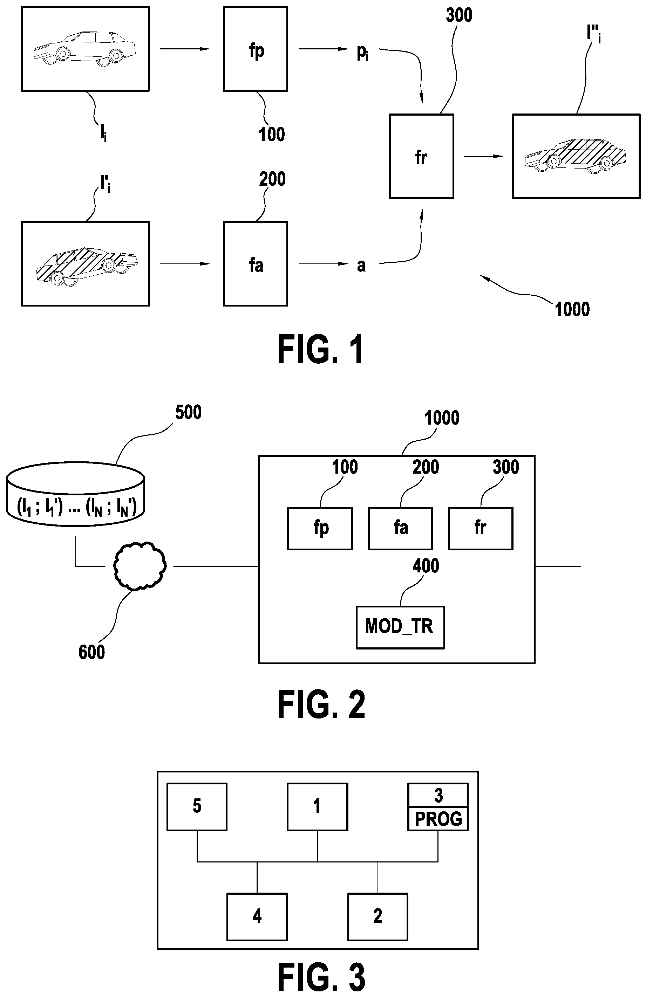

**Figure 1** depicts for illustrative purposes a data flow diagram of a training method according to a particular implementation of the invention.

As illustrated by Figure 1, the data flow diagram comprises a step of inputting a first image *Iᵢ* of a pair of images to a first neural network 100 implementing a function *fₚ* that determines the viewpoint of object instances in inputted images.

It is worth remaining that the viewpoint of an object instance may be defined as the combination of the azimuth angle of the object instance with respect to a camera, the elevation of the object instance, and the in-plane rotation of the object instance (Euler angles).

As additional neural networks will be used during the training of that neural network 100, it will also be referred to as the "first neural network". This first neural network 100 operates on the image space ***I*** to output viewpoints in a viewpoints space ***V**: fₚ: **I*** → ***V**.* More precisely, the first neural network 100 detects an object instance of a given object category in an input image *Iᵢ*, and then outputs the viewpoint *pᵢ* of an object instance in that input image *Iᵢ*.

Because it is difficult to obtain a training dataset comprising images of object instances and the corresponding viewpoints (ground truths), it is proposed to perform an unsupervised training which uses principles from conditional generation and analysis by synthesis (approaches that try to understand visual information by reconstructing input images). To this end, it is proposed to factorize the viewpoint and the appearance of object instances in images via two functions implemented by two neural networks: the above mentioned function *fₚ* and a second one *fₐ*, implemented by a second neural network 200.

More precisely, the data flow diagram also comprises a step of inputting a second image *I'ᵢ* of a pairs of images to a neural network 200 implementing a function *fₐ* that determines appearance information *a* of object instances in inputted images.

It is worth noting that according to the invention, "appearance information" of an object includes its geometry/structure, 3D shape, color, and/or texture, etc.

As additional neural networks will be used during the training of that neural network 100, it will also be referred to as the "second neural network". This second neural network 200 operates on the image space ***I*** to output appearance information in an appearance information space *A: fₐ: **I*** → ***A**.* More precisely, the second neural network 200 detects an object instance of a given object category in an input image *I'ᵢ,* and then outputs appearance information of an object instance in that input image *I'ᵢ*.

Data related to the viewpoint determined by the first neural network 100 for the object instance of the first image (*Iᵢ*) and the appearance information (*a*) determined by the second neural network 200 for the object instance of the second image (*I'ᵢ*) are inputted to a third neural network 300 configured to generate a synthetic image *I"ᵢ* of an object instance of this category of objects using a Neural Radiance Fields-based method. This synthetic image *I"ᵢ* is then processed to update weights of the respective first, second and third neural networks, with the goal of ensuring that the first neural network 100 delivers an accurate viewpoint estimation.

**Figure 2** illustrates a particular implementation of a system 1000 according to the invention.

As illustrated by Figure 2, the system 1000 comprises:
- a first neural network 100 implementing a function *fₚ*. This first neural network is configured to determine the viewpoint of an object instance in an image belonging to a given category of objects. It takes as input a first image of a pair of images (*Iᵢ, I'ᵢ*) on which an object instance belonging to this category is positioned under a first viewpoint.
- a second neural network 200 implementing a function *fₐ* configured to determine appearance information (*a*) of an object instance in an image belonging to this category of objects. It takes as input a second image of a pair of images (*Iᵢ, I'ᵢ*) on which an object instance belonging to this category is positioned under a second viewpoint which differs from the first viewpoint.
- a third neural network 300 implementing a function *fᵣ* configured to generate a synthetic image of an object instance of this category of objects using a Neural Radiance Fields-based method. It takes as inputs data related to a viewpoint determined by the first neural network for the object instance of the first image (*Iᵢ*) and an appearance information (*a*) determined by the second neural network (*fₐ*) for the object instance of the second image (*I'ᵢ*), and outputs a synthetic image for the object instance. This synthetic image may have the appearance information of the second image of the pair, and a viewpoint as close as possible to the viewpoint of the instance object of the first image of the pair.

The third neural network is a NeRF (for Neural Radiance Fields), i.e., a pipeline comprising a ray-casting operation, a neural network core, and a rendering operation. To that end, the third neural network comprises a ray-casting module configured to implement a ray-casting operation, a neural network core module, and a rendering module configured to generate the synthetic image using volume rendering techniques. The viewpoint determined by the first neural network is used to determine a set of inputs on which the core neural network is queried. In an example, this core neural network. is a fully-connected neural network which that takes as input coordinates in 3D space (e.g., x, y, z, ρ, φ) and a viewing direction determined based on this viewpoint. The use of a NeRF offers the advantage of providing a synthetic image having a high quality, since the rendering is not limited to a voxel size.

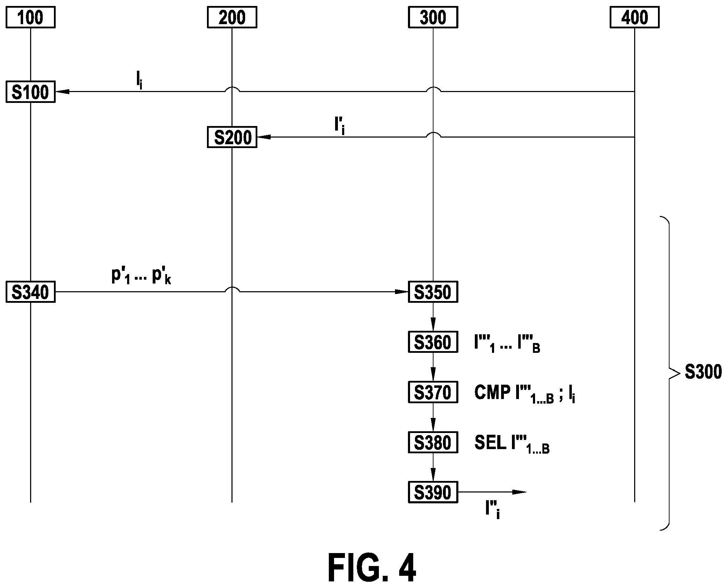

The system 1000 also comprises a module 400 (MOD_TR) configured for jointly training the first, second and third neural networks. The functionalities of that module are further detailed with respect to Figure 4.

As illustrated by Figure 2, the system 1000 is connected to a database 500 storing a training dataset *T* comprising pairs of images (*Iᵢ, I'ᵢ*)*. T* may be defined as: $T = {\left\{\left({I}_{i},I{′}_{i}\right)\right\}}_{i = 1}^{N}$ wherein (*Iᵢ, I'ᵢ*) denotes a pair of images of index i in the dataset *T* comprising *N* pairs of images. In a pair of images (*Iᵢ, I'ᵢ*)*,* both *Iᵢ* and *I'ᵢ* show a same object instance (for example the same car) but under different viewpoints.

In particular implementations, the object instances may be centered in the images (*Iᵢ, I'ᵢ*)*.* In particular implementations, these images may have a background or no background (for example they only show the object). For example, the images (*Iᵢ, I'ᵢ*) can be obtained using an object detector on frames of a video showing the object under different viewpoint (in this case they have a background), or they can be generated from a CAD model (in this case they may not have a background).

The system 1000 and the database 500 may be connected using a wired or wireless connection, via a telecommunication network 600.

**Figure 3** illustrates an example of the hardware architecture of the system illustrated by Figure 2.

To this end, the system has the hardware architecture of a computer. As shown in Figure 3, the system comprises a processor 1. Although illustrated as a single processor 1, two or more processors can be used according to particular needs, desires, or particular implementations of the system. Generally, the processor 1 executes instructions and manipulates data to perform the operations of the system and any algorithms, methods, functions, processes, flows, and procedures as described in the present disclosure.

The system also comprises communication means 5 which are used by the system for communicating with another electronic device that is communicatively linked to that system 1000, for example for connecting the database 500. Generally, the communication means 5 are operable to communicate with a radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated system.

Although illustrated as a single communication means 5 in Figure 3, two or more communication means can be used according to particular needs, desires, or particular implementations of the system. The system also comprises a random access memory 2, a read-only memory 3, and a non-volatile memory 4.

The non-volatile memory 4 of the system stores the first neural network 100 implementing the function *fₚ* ; the second neural network 200 implementing the function *fₐ* ; and the third neural network 300 implementing the function *fᵣ*)*.* The non-volatile memory 4 of the system also constitutes a recording medium conforming to the invention, which is readable by processor 1 and on which is recorded a computer program PROG conforming to the invention, containing instructions for carrying out the steps of the method for training a first neural network according to the invention. The program PROG defines functional modules of the system, which are based on or control the aforementioned elements 1 to 5 of the system, and which comprise in particular a first module including the first neural network 100, a second module including the second neural network 200, a third module including the third neural network 300 and a training module configured to jointly train the first neural network, the second neural network, and the third neural network. This third module comprises a ray-casting module configured to implement a ray-casting operation, a neural network core module, and a rendering module configured to generate a synthetic image using volume rendering techniques. The training is applied by setting weights of the first, the second and the third neural networks, so as to minimize a generation loss function based on a distance between a first image *Iᵢ* of a pairs of images (*Iᵢ, I'ᵢ*) and the synthetic image *I"ᵢ* generated by the third neural network.

The different functional modules described above can be part of a single electronic device, or can be distributed in a plurality of electronic devices belonging to that system 1000.

**Figure 4** is a flowchart of a training method according to a particular implementation of the invention.

As shown on Figure 4, the method for training a first neural network to determine the viewpoint of an object instance in an image comprises a first step S100 of inputting a first image (*Iᵢ*) of a pairs of images (*Iᵢ, I'ᵢ*) to the first neural network 100. This pair of images (*Iᵢ, I'ᵢ*) comprises a first image on which an object instance belonging to a given category is positioned under a first viewpoint (*p*), and a second image on which the same object instance is positioned under a second viewpoint which differs from the first viewpoint.

The method also comprises a second step S200 of inputting the second image (*I'ᵢ*) of this pair of images (*Iᵢ, I'ᵢ*) to a second neural network 200 configured to determine appearance information (*a*) of an object instance in an image belonging to this category of objects.

In a step 300, the first neural network 100, the second neural network 200 and a third neural network 300 configured to generate a synthetic image of an object instance of this category of objects are jointly trained. The third neural network takes as inputs data related to a viewpoint determined by the first neural network for the object instance of the first image (*Iᵢ*) and an appearance information (*a*) determined by the second neural network (*fₐ*) for the object instance of the second image (*I'ᵢ*), and the training is implemented by setting weights of the first, the second and the third neural networks, so as to minimize a generation loss function based on a distance between the first image (*Iᵢ*) of the pairs of images (*Iᵢ, I'ᵢ*) and a synthetic image (*I"ᵢ*) generated by the third neural network 300.

In a particular implementation, the distance is defined by a mean of a perceptual loss function 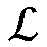 applied between the first image *Iᵢ* in its entirety and the synthetic image *I"ᵢ* for the *N* pairs of images (*Iᵢ, I'ᵢ*)*,* and the generation loss function is further based on a pose regularization term 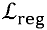 applied to the viewpoint determined by the first neural network 100. Thus, the generation loss function may be defined as: $\frac{1}{N} {\sum }_{i = 1}^{N} L \left({f}_{r}\left({f}_{a}\left({I}_{i}^{′}\right),{f}_{p}\left({I}_{i}\right)\right),{I}_{i}\right) + {λL}_{reg} \left({f}_{p}\left({I}_{n}\right)\right)$ where 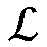 denotes the perceptual loss function 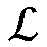 applied between the first image (*Iᵢ*) and a synthetic image (*I"ᵢ*)*, fₚ*(*Iᵢ*) the viewpoint determined by the first neural network (implementing the function *fₚ*) for the object instance of the first image (*Iᵢ*)*,* ${f}_{a} \left({I}_{i}^{′}\right)$ the appearance information determined by the second neural network (implementing the function *fₐ*) for the object instance of the second image (*I'ᵢ*), ${f}_{r} \left(\left({f}_{a}\left({I}_{i}^{′}\right),{f}_{p}\left({I}_{i}\right)\right)\right)$ the synthetic image *I"ᵢ,* 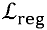 the pose regularization term applied to the viewpoint determined by the first neural network (*fₚ*), and *λ* the scalar.

The above equation is particularly useful if the images (*Iᵢ, I'ᵢ*) do not have backgrounds. If they have a background, it is preferable to replace *Iᵢ* (the second parameter of the perceptual loss function 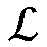 ) *by M*(*Iᵢ*)*,* the result of the application of a segmentation mask to I, this segmentation mask delimiting the pixels showing the object instance.

### First neural network 100

In a particular example, it should be noted that the first neural network can have a structure comprising 7 convolutional layers interleaved with batch normalization and ReLU activation functions. This first neural network 100 can be configured to receive RGB images having a resolution of 64x64. The invention is however not limited to this structure and this resolution, and the person skilled in the art will be able to elaborate other neural network structures for the first neural network 100. Also, this first neural network is configured to output a viewpoint p ∈ S², i.e. a point on a unit sphere. Each point on the sphere can be uniquely mapped to a viewpoint.

In another example, an EfficientNet backbone, such as described in the article "Efficientnet: Rethinking model scaling for convolutional", Mingxing Tan & Al., In International conference on machine learning, pages 6105-6114, PMLR, 2019, is used.

The viewpoint *p* is preferably expressed as a rotation matrix in the training stage, so as to be usable by the third neural network 300 as will be explained hereinafter.

In order to obtain a viewpoint expressed as a rotation matrix, an orthogonalization operation is performed on the output of the first neural network 100. First, a vector u is arbitrarily chosen as representing the upwards direction, two successive cross product are performed: w = v × u and u' = w × v, the results are normalized, and the rotation matrix R is defined as [v, w, u']. The module which performs the steps to obtain *R* can be learnable (differentiable), and it is also possible to learn u jointly with v.

### Multi-hypothesis predictions

In a particular implementation, the first neural network 100 is configured to output a plurality of viewpoint estimations. In that case, the first neural network 100 comprises a multi-head predictor, and the training step 300 comprises:
- a sub-step of determining (S340), by the first neural network 100, a plurality of *B* viewpoint hypothesis ${p}_{1 , … , B}^{′}$,
- a sub-step of inputting (S350) this plurality of *B* viewpoint hypothesis to the third neural network 300;
- for each viewpoint hypothesis of the plurality, generating (S360), by the third neural network 300, an intermediate image (*I*‴*ᵢ*) with a first resolution,
- for each intermediate image (*I*‴*ᵢ*) computing (S370), by the third neural network 300, a distance between said intermediate image (*I*‴*ᵢ*) and the first image (*Iᵢ*) of the pairs of images (*Iᵢ, I'ᵢ*)*,*
- selecting (S380), by the third neural network 300, the viewpoint hypothesis with the shortest distance; and,
- generating (S390), by the third neural network 300, the synthetic image (*I"ᵢ*) with a second resolution based on the selected viewpoint hypothesis, the second resolution being higher than the first resolution.

As indicated above, a known difficulty is that the first neural network 100 may be subject to local minima and may not receive, during back propagating gradients, meaningful gradients from the third neural network 300, as reconstruction errors can arise either from the reconstruction process or an incorrect viewpoint prediction. This may lead to the collapse of viewpoint predictions and to the generation of a synthetic image *I"ᵢ* where the model relies only on the appearance encoding *a*. It has been observed that having a first neural network able to deliver multiple hypotheses, and a third neural network configured to generate a high quality synthetic image associated with the smallest distance can overcome this difficulty.

It is worth noting that during the testing or inference phase, i.e., once the first neural network is trained to determine viewpoints of object instances, having multiple hypotheses may not be convenient or may be expensive. To overcome this difficulty, it is proposed to train the multi-head predictor so that only the best prediction *p*' is determined, thus removing the need for multiple outputs.

### Pose regularization

However, multiple viewpoint predictions alone are not always sufficient to prevent training collapse or instability as all heads could still predict the same pose. For that reason, in particular implementations, the viewpoint hypothesis distribution follows a prior distribution 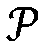 .

Generative models already sample a viewpoint *p* from a prior distribution 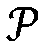 (*p* ~ 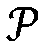 ) and use it to generate an image. However, this technique cannot be directly applied, as a random viewpoint of an object instance would not match that of the synthetic image that is to be generated. For that reason, batch-wise distributions are matched, following the assumption that a batch of predicted viewpoints should closely follow the viewpoint prior distribution 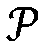 .

Specifically, given a batch of *B* predicted poses ${p}_{1 , … , B}^{′}$, *K* pseudo-targets are sampled ${p}_{1 , … , K}^{∗} ∼ P$ and, for each ${p}_{i}^{∗}$, its closest match ${p}_{j}^{′}$ is computed in the batch. Finally, the distance ${\left‖{p}_{i}^{∗}-{p}_{j}^{′}\right‖}^{2}$ is used for computing the loss, i.e., ${L}_{reg} = \frac{1}{K} {\sum }_{i = 1}^{K} {min}_{j = 1 … B} {\left‖{p}_{i}^{′}-{p}_{j}^{∗}\right‖}^{2}$

This feature prevents the collapse of all predictions to a single point while being very cost-efficient.

In a particular implementation, to prevent unnecessary noise, the pose regularization term 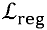 is weighted by a scalar *λ* which is progressively tuned during training. In an example, this scalar *λ* is initialized to 1, and then, every 10 Epochs, the scalar is divided by 10, until reaching Epoch 30. After Epoch 30, it is completely disabled.

### Second neural network 200

Concerning the second neural network 200, it should be noted that in an example, it can have a structure comprising 7 convolutional layers interleaved with batch normalization and ReLU activation functions. The second neural network 200 can be configured to receive RGB images having a resolution of 64x64. The invention is however not limited to this structure and this resolution, and the person skilled in the art will be able to elaborate other neural network structures for this second neural network.

In another example, an EfficientNet backbone, such as described in the article "Efficientnet: Rethinking model scaling for convolutional", Mingxing Tan & Al., In International conference on machine learning, pages 6105-6114, PMLR, 2019, is used.

The function *fₐ* implemented by this second neural network may be defined as ${f}_{a} \left(I′\right) = a " ∈ {ℝ}^{n}$. *n* is selected empirically, for example set at 128, 256, or even 1024, so as to ensure that the system operates without too much overhead, and this second neural network has the structure of an encoder which could be a portion of an auto-encoder.

### Third neural network 300

The third neural network is a NeRF (for Neural Radiance Fields), i.e., a fully-connected neural network trained to map directly from viewpoint and appearance information to opacity and color, using volume rendering techniques to generate the synthetic image.

NeRFs are typically formulated as 3D models configured to learn how a scene should be reconstructed when observed from specified viewpoint. Formally, NeRFs combine a well-known volume rendering operation with a neural network that learns to map an input (***x**, ρ*) ∈ R³ × 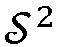 , consisting of a 3D coordinate and a viewing direction *ρ*, to a 4D vector (*r, g, b, σ*) in RGBA space.

To reconstruct an image, rays corresponding to each pixel are cast from a camera having a viewpoint *p*, and the neural network is queried multiple times along each ray to estimate the color and occupancy at those locations. Then, values along the ray are integrated according to their density to form a single pixel value. The predicted occupancy *σ* only depends on the input coordinates **x**, which provides relatively strong 3D consistency.

This third neural network has the structure of a decoder of an auto-encoder. Standard NeRFs are typically trained to model a single 3D scene, effectively memorizing its shape and appearance from multiple predetermined (or known) viewpoints. In a category-based setting, this would mean training an individual model for each object instance, which would be very time consuming and not optimal since no information across instances would be shared.

Hence, in particular implementations, the third neural network uses an object conditional generating process to reconstruct specific instances. More precisely, the third neural network comprises a plurality of fully-connected layers, and the method according to the invention further comprises inputting the appearance information to different fully-connected (hidden) layers of the plurality by summing the appearance information and output of the hidden layer.

Furthermore, it is worth noting that several approaches tried to extend NeRFs to unknown viewpoints. However, these approaches are typically initiated using a random viewpoint, which require performing several iterations to gradually align the two images. This results in a slow process, which can further lead to local minima in a multi-objects setting. In comparison and as further detailed below, during testing, the method of the invention can predict viewpoint of unseen object instances in a single shot/iteration.

### Experiments

The invention was implemented using EfficientNet backbones for the first and second neural networks, and an efficient NeRF model with two fully connected layers with 128 dimensions for the core neural network of the third neural network acting as a decoder.

As the main goal of the experiments was to estimate viewpoint from single images rather than generating high-fidelity reconstruction, the method of the invention was in terms of viewpoint accuracy, reporting rotation and translation errors.

The method of the invention was evaluated with a dataset named the ShapeNet-SRN dataset, and which contains renderings of ShapeNet cars and chairs. ShapeNet is a richly-annotated, large-scale dataset of 3D shapes available at https://shapenet.org/.

| | Supervised | | | | Unsupervised | | | |
|---|---|---|---|---|---|---|---|---|
| | CodeNeRF, w/o init | | CodeNeRF, w/ init | | ViewNet | | Invention | |
| | car | chair | car | chair | car | chair | car | chair |
| Accuracy at 10°(%, ↑ ) | 08.5 | 03.4 | 82.1 | 60.2 | 61.2 | 76.7 | **70.0** | **82.8** |
| Median rotation error (°,↓) | 115 | 108 | 3.53 | 7.70 | 6.54 | 4.25 | **5.71** | **4.18** |
| Median translation error (%, ↓) | 139 | 134 | 5.9 | 13.9 | *n*/*a* | *n*/*a* | **8.0** | **6.4** |

The method of the invention is compared with CodeNeRF (detailed in "CodeNeRF: Disentangled Neural Radiance Fields for Object Categories", Jang & Al., Proceedings of the IEEE/CVF International Conference on Computer Vision (ICCV), 2021, pp. 12949-12958) under two settings, one where the starting pose is uniformly sampled according to a training distribution ('w/o init'), the other one in which the initial pose is chosen to be whithin 30° of the ground truth ('w/init'), and with ViewNet (detailed in "ViewNet: Unsupervised Viewpoint Estimation from Conditional Generation", Mariotti & Al., 2021 IEEE/CVF International Conference on Computer Vision (ICCV), 2021, pp. 10398-10408).
The results in the table above illustrate that CodeNeRF, despite being trained with a ground-truth pose, is unable to properly estimate pose/viewpoint when the initial estimate is noisy. Since both pose/viewpoint and appearance information have to be jointly optimized, the process converges to a degenerate solution, relying mostly on the appearance information rather than pose to minimize the reconstruction error. While reconstruction with good initializations are rather accurate, noisy initialization results in poor reconstructions. Finally, compared with ViewNet, the method of the invention reaches higher pose prediction performances by making fewer gross pose errors, such as predicting the wrong orientation for a car).

## Claims

1. A method for training a first neural network (100) to determine the viewpoint of an object instance in an image, the object instance belonging to a category of objects, the method comprising, for each pair of a training dataset (*T*) of *N* unlabeled pairs of images (*Iᵢ, I'ᵢ*)*,* each pair of images (*Ii, I'ᵢ*) comprising a first image on which an object instance belonging to said category is positioned under a first viewpoint (p), and a second image on which the same object instance is positioned under a second viewpoint which differs from the first viewpoint:
- inputting (S100) the first image (*Iᵢ*) of the pairs of images (*Iᵢ, I'ᵢ*) to the first neural network (100), said first neural network being configured to determine the viewpoint (*p*') of an object instance in an image belonging to said category of objects,
- inputting (S200) the second image (*I'ᵢ*) of the pairs of images (*Iᵢ, I'ᵢ*) to a second neural network (200) configured to determine appearance information (*a*) of an object instance in an image belonging to said category of objects,
- jointly training (S300) the first neural network (100), the second neural network (200) and a third neural network (300) configured to generate a synthetic image of an object instance of said category of objects using a Neural Radiance Fields-based model, the third neural network (300) having as inputs data related to a viewpoint (*p*') determined by the first neural network for the object instance of the first image (*Iᵢ*) and an appearance information (*a*) determined by the second neural network (200) for the object instance of the second image (*I'ᵢ*), the training being applied by setting weights of the first, the second and the third neural networks, so as to minimize a generation loss function based on a distance between the first image (*Iᵢ*) of the pairs of images (*Iᵢ, I'ᵢ*) and a synthetic image (*I"ᵢ*) generated by the third neural network (300).

2. The method of claim 1, wherein the distance is defined by a mean of a perceptual loss function 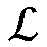 applied between the first image (Iᵢ) and a synthetic image (I"ᵢ), for the N pairs of images (Iᵢ, I'ᵢ).

3. The method of claims 2, wherein the generation loss function is further based on a pose regularization term 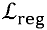 applied to the viewpoint determined by the first neural network (100).

4. The method of Claim 3, wherein the pose regularization term 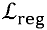 is weighted by a scalar *λ* progressively tuned during training.

5. The method of Claim 4, wherein the generation loss function equals $\frac{1}{N} {\sum }_{i = 1}^{N} L \left({f}_{r}\left({f}_{a}\left({I}_{i}^{′}\right),{f}_{p}\left({I}_{i}\right)\right),{I}_{i}\right) + {λL}_{reg} \left({f}_{p}\left({I}_{n}\right)\right)$ with 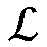 the perceptual loss function 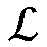 applied between the first image (*Iᵢ*) and a synthetic image (*I"ᵢ*)*, fₚ*(*Iᵢ*) the viewpoint determined by the first neural network for the object instance of the first image (*Iᵢ*)*,* ${f}_{a} \left({I}_{i}^{′}\right)$ the appearance information determined by the second neural network (200) for the object instance of the second image (*I'ᵢ*), ${f}_{r} \left(\left({f}_{a}\left({I}_{i}^{′}\right),{f}_{p}\left({I}_{i}\right)\right)\right)$ the synthetic image *I"ᵢ,* 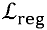 the pose regularization term applied to the viewpoint determined by the first neural network (100), and *λ* the scalar.

6. The method of one of Claims 1 to 5, wherein the first neural network (100) comprises a multi-head predictor configured to determine (S340) a plurality of *B* viewpoint hypothesis ${p}_{1 , … , B}^{′}$, and the method further comprises, at the third neural network (300):
- for each viewpoint hypothesis of the plurality, generating (S360) an intermediate image (*I*‴*ᵢ*) with a first quality,
- for each intermediate image (*I*‴*ᵢ*) computing (S370) a distance between said intermediate image (*I*‴*ᵢ*) and the first image (*Iᵢ*) of the pairs of images (*Iᵢ,I'ᵢ*),
- selecting (S380) the viewpoint hypothesis associated with the shortest distance; and,
- generating (S390) the synthetic image (*I"ᵢ*) with a second quality based on the selected viewpoint hypothesis, the second quality being higher than the first quality.

7. The method of Claim 6, wherein the viewpoint hypothesis are distributed by following a prior distribution 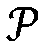 .

8. The method of Claim 7 in combination with Claim 3, wherein the pose regularization term generation 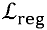 () is defined as ${L}_{reg} = \frac{1}{K} {\sum }_{i = 1}^{K} {min}_{j = 1 .. B} {\left‖{p}_{i}^{∗}-{p}_{j}^{′}\right‖}^{2}$ with *K* a number of pseudo-targets ${p}_{1 , … , K}^{∗} ∼ P$ selected among the *B* viewpoint hypothesis ${p}_{1 , … B}^{′} , {p}_{j}^{′}$ the viewpoint hypothesis having the closest distance with a pseudo-target ${p}_{i}^{∗}$, and ∥ ∥ a distance.

9. The method of any one of Claims 1 to 8, wherein the third neural network (*fᵣ*) uses an object conditional generating process, wherein the third neural network comprises a core neural network having a plurality of fully connected layers, the method further comprising inputting the appearance information to different fully connected layers of the plurality.

10. The method of one of Claims 1 to 9, wherein the second neural network (200) is trained to learn a global latent space shared over all object instances of the dataset.

11. A system for training a first neural network (100) to determine the viewpoint of an object instance in an image, the object instance belonging to a category of objects, the system comprising:
- a first module including the first neural network (100), said first neural network being configured to determine the viewpoint of an object instance in an image belonging to said category of objects, said first neural network being configured to take as input a first image of a pair of images (*Iᵢ, I'ᵢ*) on which an object instance belonging to said category is positioned under a first viewpoint (*p*);
- a second module including a second neural network (200) configured to determine appearance information (*a*) of an object instance in an image belonging to said category of objects, said second neural network being configured to take as input a second image of a pair of images (*Iᵢ, I'ᵢ*) on which an object instance belonging to said category is positioned under a second viewpoint which differs from the first viewpoint;
- a third module including a third neural network (300) configured to generate a synthetic image of an object instance of said category of objects using a Neural Radiance Fields-based method, the third neural network (300) having as inputs data related to a viewpoint (*p*') determined by the first neural network for the object instance of the first image (*Iᵢ*) and an appearance information (*a*) determined by the second neural network (200) for the object instance of the second image (*I'ᵢ*), and,
- a training module (MOD_TR) configured to jointly train the first neural network (100), the second neural network (200) and the third neural network (300), the training being applied by setting weights of the first, the second and the third neural networks, so as to minimize a generation loss function based on a distance between the first image (*Iᵢ*) of the pairs of images (*Iᵢ, I'ᵢ*) and a synthetic image (*I"ᵢ*) generated by the third neural network (300).

12. A computer program including instructions for executing the steps of a method according to any one of claims 1 to 10 when said program is executed by a computer.

13. A recording medium readable by a computer and having recorded thereon a computer program including instructions for executing the steps of a method according to any one of claims 1 to 10.

## Patentansprüche

1. Verfahren zum Trainieren eines ersten neuronalen Netzwerks (100), um den Blickwinkel einer Objektinstanz in einem Bild zu bestimmen, wobei die Objektinstanz zu einer Kategorie von Objekten gehört, wobei das Verfahren für jedes Paar eines Trainingsdatensatzes (*T*) aus *N* nicht markierten Bilderpaaren (*Iᵢ,* ${I}_{i}^{′}$), wobei jedes Bilderpaar (*Iᵢ*, ${I}_{i}^{′}$) ein erstes Bild, in dem eine Objektinstanz, die zu der Kategorie gehört, in einem ersten Blickwinkel (*p*) positioniert ist, und ein zweites Bild, in dem die gleiche Objektinstanz in einem zweiten Blickwinkel positioniert ist, der anders als der erste Blickwinkel ist, umfasst, folgende Schritte umfasst:
- Eingeben (S100) des ersten Bildes (*Iᵢ*) der Bilderpaare (*Iᵢ*, ${I}_{i}^{′}$) in das erste neuronale Netzwerk (100), wobei das erste neuronale Netzwerk dazu konfiguriert ist, den Blickwinkel (*p*') einer Objektinstanz in einem Bild, das zu der Kategorie von Objekten gehört, zu bestimmen,
- Eingeben (S200) des zweiten Bildes ( ${I}_{i}^{′}$) der Bilderpaare (*Iᵢ*, ${I}_{i}^{′}$) in ein zweites neuronales Netzwerk (200), das dazu konfiguriert ist, Erscheinungsinformationen (*a*) einer Objektinstanz in einem Bild, das zu der Kategorie von Objekten gehört, zu bestimmen,
- gemeinsames Trainieren (S300) des ersten neuronalen Netzwerks (100), des zweiten neuronalen Netzwerks (200) und eines dritten neuronalen Netzwerks (300), das dazu konfiguriert ist, ein synthetisches Bild einer Objektinstanz der Kategorie von Objekten unter Verwendung eines auf neuronalen Strahlungsfeldern basierenden Modells zu erzeugen, wobei das dritte neuronale Netzwerk (300) als Eingaben Daten, die mit einem Blickwinkel (*p*') zusammenhängen, der durch das erste neuronale Netzwerk für die Objektinstanz des ersten Bildes (*Iᵢ*) bestimmt wird, und Erscheinungsinformationen (*a*), die durch das zweite neuronale Netzwerk (200) für die Objektinstanz des zweiten Bildes ( ${I}_{i}^{′}$) bestimmt werden, aufweist, wobei das Trainieren angewendet wird, in dem Gewichtungen des ersten, des zweiten und des dritten neuronalen Netzwerks derart eingestellt werden, dass sie eine Erzeugungsverlustfunktion basierend auf einem Abstand zwischen dem ersten Bild (*Iᵢ*) der Bilderpaare (*Iᵢ*, ${I}_{i}^{′}$) und einem synthetischen Bild ( ${I}_{i}^{"}$), das durch das dritte neuronale Netzwerk (300) erzeugt wird, minimieren.

2. Verfahren nach Anspruch 1, wobei der Abstand durch einen Mittelwert einer Wahrnehmungsverlustfunktion 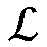 definiert wird, die zwischen dem ersten Bild (*Iᵢ*) und einem synthetischen Bild ( ${I}_{i}^{"}$) für die N Bilderpaare (*Iᵢ,* ${I}_{i}^{′}$) angewendet wird.

3. Verfahren nach Anspruch 2, wobei die Erzeugungsverlustfunktion ferner auf einem Posenregularisierungsterm 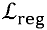 basiert, der auf den Blickwinkel angewendet wird, der durch das erste neuronale Netzwerk (100) bestimmt wird.

4. Verfahren nach Anspruch 3, wobei der Posenregularisierungsterm 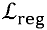 durch einen Skalar λ gewichtet wird, der während des Trainierens nach und nach abgestimmt wird.

5. Verfahren nach Anspruch 4, wobei die Erzeugungsverlustfunktion gleich $\frac{1}{n} {\sum }_{I = 1}^{N} L \left({f}_{r}\left({f}_{a}\left({I}_{i}^{′}\right),{f}_{p}\left({I}_{i}\right)\right),{I}_{i}\right) + λ {L}_{reg} \left({f}_{p}\left({I}_{n}\right)\right)$ ist, wobei 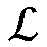 die Wahrnehmungsverlustfunktion 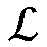 ist, die zwischen dem ersten Bild (*Iᵢ*) und einem synthetischen Bild ( ${I}_{i}^{"}$) angewendet wird, *fₚ*(*Iᵢ*) der Blickwinkel ist, der durch das erste neuronale Netzwerk für die Objektinstanz des ersten Bildes (*Iᵢ*) bestimmt wird, ${f}_{a} \left({I}_{i}^{′}\right)$ die Erscheinungsinformationen sind, die durch das zweite neuronale Netzwerk (200) für die Objektinstanz des zweiten Bildes ( ${I}_{i}^{′}$) bestimmt werden, ${f}_{r} \left(\left({f}_{a}\left({I}_{i}^{′}\right),{f}_{p}\left({I}_{i}\right)\right)\right)$ das synthetische Bild ${I}_{i}^{"}$ ist, 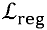 der Posenregularisierungsterm ist, der auf den Blickwinkel angewendet wird, der durch das erste neuronale Netzwerk (100) bestimmt wird, und λ der Skalar ist.

6. Verfahren nach einem von Anspruch 1 bis 5, wobei das erste neuronale Netzwerk (100) einen Mehrkopfprädiktor umfasst, der dazu konfiguriert ist, eine Vielzahl von B Blickwinkelhypothesen ${p}_{1 , … , B}^{′}$ zu bestimmen (S340), und das Verfahren ferner an dem dritten neuronalen Netzwerk (300) Folgendes umfasst:
- für jede Blickwinkelhypothese der Vielzahl, Erzeugen (S360) eines Zwischenbildes ( ${I}_{i}^{‴}$) mit einer ersten Qualität,
- für jedes Zwischenbild ( ${I}_{i}^{‴}$) Berechnen (S370) eines Abstands zwischen dem Zwischenbild ( ${I}_{i}^{‴}$) und dem ersten Bild (*Iᵢ*) der Bilderpaare (*Iᵢ,* ${I}_{i}^{′}$)*,*
- Auswählen (S380) der Blickwinkelhypothese, die dem kürzesten Abstand zugeordnet ist; und
- Erzeugen (S390) des synthetischen Bildes ( ${I}_{i}^{"}$) mit einer zweiten Qualität basierend auf der ausgewählten Blickwinkelhypothese, wobei die zweite Qualität besser als die erste Qualität ist.

7. Verfahren nach Anspruch 6, wobei die Blickwinkelhypothesen verteilt werden, indem eine vorherige Verteilung 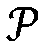 befolgt wird.

8. Verfahren nach Anspruch 7 kombiniert mit Anspruch 3, wobei die Erzeugung 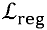 () des Posenregularisierungsterms definiert wird als ${L}_{reg} = \frac{1}{K} {\sum }_{i = 1}^{K} {min}_{j = 1 .. B} {\left‖{p}_{i}^{∗}-{p}_{j}^{′}\right‖}^{2}$ wobei *K* eine Anzahl von Pseudozielen ${p}_{1 , … , K}^{∗} ∼ P$ ist, die aus der *B* Blickwinkelhypothese ${p}_{1 , … , B}^{′} , {p}_{j}^{′}$ ausgewählt werden, wobei die Blickwinkelhypothese den nächsten Abstand zu einem Pseudoziel ${p}_{i}^{∗}$ aufweist, und ∥∥ ein Abstand ist.

9. Verfahren nach einem der Ansprüche 1 bis 8, wobei das dritte neuronale Netzwerk (*fᵣ*) einen objektabhängigen Erzeugungsprozess verwendet, wobei das dritte neuronale Netzwerk ein neuronales Kernnetzwerk umfasst, das eine Vielzahl von vollständig verbundenen Schichten aufweist, wobei das Verfahren ferner das Eingeben der Erscheinungsinformationen in verschiedene vollständig verbundene Schichten der Vielzahl umfasst.

10. Verfahren nach einem der Ansprüche 1 bis 9, wobei das zweite neuronale Netzwerk (200) dazu trainiert wird, einen globalen latenten Raum zu erlernen, der über alle Objektinstanzen des Datensatzes hinweg gemeinsam genutzt wird.

11. System zum Trainieren eines ersten neuronalen Netzwerks (100), um den Blickwinkel einer Objektinstanz in einem Bild zu bestimmen, wobei die Objektinstanz zu einer Kategorie von Objekten gehört, wobei das System umfasst:
- ein erstes Modul, welches das erste neuronale Netzwerk (100) umfasst, wobei das erste neuronale Netzwerk dazu konfiguriert ist, den Blickwinkel einer Objektinstanz in einem Bild, das zu der Kategorie von Objekten gehört, zu bestimmen, wobei das erste neuronale Netzwerk dazu konfiguriert ist, als Eingabe ein erstes Bild eines Bilderpaars (*Iᵢ*, ${I}_{i}^{′}$) zu nehmen, in dem eine Objektinstanz, die zu der Kategorie gehört, in einem ersten Blickwinkel (*p*) positioniert ist;
- ein zweites Modul, das ein zweites neuronales Netzwerk (200) umfasst, das dazu konfiguriert ist, Erscheinungsinformationen (*a*) einer Objektinstanz in einem Bild, das zu der Kategorie von Objekten gehört, zu bestimmen, wobei das zweite neuronale Netzwerk dazu konfiguriert ist, als Eingabe ein zweites Bild eines Bilderpaars (*Iᵢ*, ${I}_{i}^{′}$) zu nehmen, in dem eine Objektinstanz, die zu der Kategorie gehört, in einem zweiten Blickwinkel, der anders als der erste Blickwinkel ist, positioniert ist;
- ein drittes Modul, das ein drittes neuronales Netzwerk (300) umfasst, das dazu konfiguriert ist, ein synthetisches Bild einer Objektinstanz der Kategorie von Objekten unter Verwendung eines auf neuronalen Strahlungsfeldern basierenden Verfahrens zu erzeugen, wobei das dritte neuronale Netzwerk (300) als Eingaben Daten bezüglich eines Blickwinkels (*p'*), der durch das erste neuronale Netzwerk für die Objektinstanz des ersten Bildes (*Iᵢ*) bestimmt wird, und Erscheinungsinformationen (*a*), die durch das zweite neuronale Netzwerk (200) für die Objektinstanz des zweiten Bildes ( ${I}_{i}^{′}$) bestimmt werden, aufweist, und
- ein Trainingsmodul (MOD_TR), das dazu konfiguriert ist, das erste neuronale Netzwerk (100), das zweite neuronale Netzwerk (200) und das dritte neuronale Netzwerk (300) gemeinsam zu trainieren, wobei das Trainieren dadurch angewendet wird, dass die Gewichtungen des ersten, des zweiten und des dritten neuronalen Netzwerks derart eingestellt werden, dass sie eine Erzeugungsverlustfunktion basierend auf einem Abstand zwischen dem ersten Bild (*Iᵢ*) der Bilderpaare (*Iᵢ,* ${I}_{i}^{′}$) und einem synthetischen Bild ( ${I}_{i}^{"}$), das durch das dritte neuronale Netzwerk (300) erzeugt wird, minimieren.

12. Computerprogramm, umfassend Anweisungen zum Ausführen der Schritte eines Verfahrens nach einem der Ansprüche 1 bis 10, wenn das Programm von einem Computer ausgeführt wird.

13. Aufzeichnungsmittel, das durch einen Computer lesbar ist und auf dem ein Computerprogramm aufgezeichnet ist, das Anweisungen zum Ausführen der Schritte eines Verfahrens nach einem der Ansprüche 1 bis 10 umfasst.

## Revendications

1. Procédé d'entraînement d'un premier réseau neuronal (100) pour déterminer le point de vue d'une instance d'objet dans une image, l'instance d'objet appartenant à une catégorie d'objets, le procédé comprenant, pour chaque paire d'un ensemble de données d'entraînement (*T*) de *N* paires d'images (*Iᵢ, I'ᵢ*) non étiquetées, chaque paire d'images (*Iᵢ*, *I'ᵢ*) comprenant une première image sur laquelle une instance d'objet appartenant à ladite catégorie est positionnée selon un premier point de vue (*p*), et une deuxième image sur laquelle la même instance d'objet est positionnée selon un deuxième point de vue différent du premier point de vue :
- entrer (S100) la première image (*Iᵢ*) des paires d'images (*Iᵢ, I'ᵢ*) dans le premier réseau neuronal (100), ledit premier réseau neuronal étant configuré pour déterminer le point de vue (*ₚ*') d'une instance d'objet dans une image appartenant à ladite catégorie d'objets,
- entrer (S200) la deuxième image (*I'ᵢ*) des paires d'images (*Iᵢ, I'ᵢ*) dans un deuxième réseau neuronal (200) configuré pour déterminer des informations d'apparence (*ₐ*) d'une instance d'objet dans une image appartenant à ladite catégorie d'objets,
- entraîner conjointement (S300) le premier réseau neuronal (100), le deuxième réseau neuronal (200) et un troisième réseau neuronal (300) configuré pour générer une image synthétique d'une instance d'objet de ladite catégorie d'objets en utilisant un modèle basé sur les champs de radiance neuronale, le troisième réseau neuronal (300) ayant pour entrées des données relatives à un point de vue (*ₚ*') déterminé par le premier réseau neuronal pour l'instance d'objet de la première image (*Iᵢ*) et des informations d'apparence (*ₐ*) déterminées par le deuxième réseau neuronal (200) pour l'instance d'objet de la deuxième image (*I'ᵢ*), l'entraînement étant appliqué en fixant des poids des premier, deuxième et troisième réseaux neuronaux de sorte à minimiser une fonction de perte de génération basée sur une distance entre la première image (*Iᵢ*) des paires d'images (*Iᵢ, I'ᵢ*) et une image synthétique (*I*''*ᵢ*) générée par le troisième réseau neuronal (300).

2. Procédé selon la revendication 1, dans lequel la distance est définie par une moyenne d'une fonction de perte perceptuelle 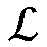 appliquée entre la première image (*Iᵢ*) et une image synthétique (*I"ᵢ*) pour les *N* paires d'images (*Iᵢ, I'ᵢ*)*.*

3. Procédé selon la revendication 2, dans lequel la fonction de perte de génération est en outre basée sur un terme de régularisation de pose 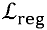 appliqué au point de vue déterminé par le premier réseau neuronal (100).

4. Procédé selon la revendication 3, dans lequel le terme de régularisation de pose 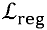 est pondéré par un scalaire *λ* ajusté progressivement au cours de l'entraînement.

5. Procédé selon la revendication 4, dans lequel la fonction de perte de génération est égale à $\frac{1}{N} {\sum }_{i = 1}^{N} L \left({f}_{r}\left({f}_{a}\left({I}_{i}^{′}\right),{f}_{p}\left({I}_{i}\right)\right),{I}_{i}\right) + {λL}_{reg} \left({f}_{p}\left({I}_{n}\right)\right)$ 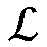 étant la fonction de perte perceptuelle 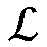 appliquée entre la première image (*Iᵢ*) et une image synthétique (*I"ᵢ*)*, fₚ*(*Iᵢ*) étant le point de vue déterminé par le premier réseau neuronal pour l'instance d'objet de la première image (*Iᵢ*)*,* ${f}_{a} \left({I}_{i}^{′}\right)$ étant les informations d'apparence déterminées par le deuxième réseau neuronal (200) pour l'instance d'objet de la deuxième image (*I'ᵢ*)*,* ${f}_{r} \left(\left({f}_{a}\left({I}_{i}^{′}\right),{f}_{p}\left({I}_{i}\right)\right)\right)$ étant l' image synthétique *I"ᵢ,* 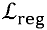 étant le terme de régularisation de pose appliqué au point de vue déterminé par le premier réseau neuronal (100), et λ étant le scalaire.

6. Procédé selon l'une des revendications 1 à 5, dans lequel le premier réseau neuronal (100) comprend un prédicteur à têtes multiples configuré pour déterminer (S340) une pluralité de *B* hypothèses de point de vue ${p}_{1 , … B}^{′}$*,* et le procédé comprend en outre, au troisième réseau neuronal (300) :
- pour chaque hypothèse de point de vue de ladite pluralité, générer (S360) une image intermédiaire (*I*‴*ᵢ*) avec une première qualité,
- pour chaque image intermédiaire (*I‴ᵢ*)*,* calculer (S370) une distance entre ladite image intermédiaire et la première image (*Iᵢ*) des paires d'images (*Iᵢ, I'ᵢ*)*,*
- sélectionner (S380) l'hypothèse de point de vue associée à la distance la plus courte ; et
- générer (S390) l'image synthétique (*I"ᵢ*) avec une deuxième qualité sur la base de l'hypothèse de point de vue sélectionnée, la deuxième qualité étant supérieure à la première qualité.

7. Procédé selon la revendication 6, dans lequel les hypothèses de point de vue sont distribuées en suivant une distribution a priori P.

8. Procédé selon la revendication 7 en combinaison avec la revendication 3, dans lequel la génération du terme de régularisation de pose 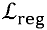 () est définie comme suit ${L}_{reg} = \frac{1}{K} {\sum }_{i = 1}^{K} {min}_{j = 1 .. B} {\left‖{p}_{i}^{∗}-{p}_{j}^{′}\right‖}^{2}$ *K* étant un nombre de pseudo-cibles ${p}_{1 , … K}^{∗} ∼ P$ sélectionnées parmi les *B* hypothèses de point de vue ${p}_{1 , … B}^{′} , {p}_{j}^{′}$, l'hypothèse de point de vue ayant la distance la plus proche d'une pseudo-cible ${p}_{i}^{∗}$, et ∥ ∥ étant une distance.

9. Procédé selon l'une des revendications 1 à 8, dans lequel le troisième réseau neuronal (*fᵣ*) utilise un processus de génération conditionné par l'objet, dans lequel le troisième réseau neuronal comprend un réseau neuronal central ayant une pluralité de couches entièrement connectées, le procédé comprenant en outre l'entrée des informations d'apparence dans différentes couches entièrement connectées de ladite pluralité.

10. Procédé selon l'une des revendications 1 à 9, dans lequel le deuxième réseau neuronal (200) est entraîné pour apprendre un espace latent global partagé par toutes les instances d'objets de l'ensemble de données.

11. Système pour entraîner un premier réseau neuronal (100) pour déterminer le point de vue d'une instance d'objet dans une image, l'instance d'objet appartenant à une catégorie d'objets, le système comprenant :
- un premier module comportant le premier réseau neuronal (100), ledit premier réseau neuronal étant configuré pour déterminer le point de vue d'une instance d'objet dans une image appartenant à ladite catégorie d'objets, ledit premier réseau neuronal étant configuré pour prendre comme entrée une première image d'une paire d'images (*Iᵢ, I'ᵢ*) sur laquelle une instance d'objet appartenant à ladite catégorie est positionnée selon un premier point de vue (*p*) *;*
- un deuxième module comportant un deuxième réseau neuronal (200) configuré pour déterminer des informations d'apparence (*ₐ*) d'une instance d'objet dans une image appartenant à ladite catégorie d'objets, ledit deuxième réseau neuronal étant configuré pour prendre comme entrée une deuxième image d'une paire d'images (*Iᵢ*, *I'ᵢ*) sur laquelle une instance d'objet appartenant à ladite catégorie est positionnée selon un deuxième point de vue différent du premier point de vue ;
- un troisième module comportant un troisième réseau neuronal (300) configuré pour générer une image synthétique d'une instance d'objet de ladite catégorie d'objets en utilisant un procédé basé sur les champs de radiance neuronale, le troisième réseau neuronal (300) ayant pour entrées des données relatives à un point de vue (*ₚ*') déterminées par le premier réseau neuronal pour l'instance d'objet de la première image (*Iᵢ*) et des informations d'apparence (*ₐ*) déterminées par le deuxième réseau neuronal (200) pour l'instance d'objet de la deuxième image (*I'ᵢ*), et
- un module d'entraînement (MOD_TR) configuré pour entraîner conjointement le premier réseau neuronal (100), le deuxième réseau neuronal (200) et le troisième réseau neuronal (300), l'entraînement étant appliqué en fixant des poids des premier, deuxième et troisième réseaux neuronaux de sorte à minimiser une fonction de perte de génération basée sur une distance entre la première image (*_{Ii}*) des paires d'images (*_{Ii}*, *I'ᵢ*) et une image synthétique (*I*''*ᵢ*) générée par le troisième réseau neuronal (300).

12. Programme d'ordinateur comprenant des instructions pour exécuter les étapes d'un procédé selon l'une des revendications 1 à 10 lorsque ledit programme est exécuté par un ordinateur.

13. Support d'enregistrement lisible par un ordinateur sur lequel est enregistré un programme d'ordinateur comprenant des instructions pour exécuter les étapes d'un procédé selon l'une des revendications 1 à 10.
